# EUROPEAN PATENT APPLICATION

(11) **EP 3 506 035 A1**
(43) Date of publication of application: **03.07.2019**
(21) Application number: 18212884.3
(22) Date of filing: 17.12.2018
(51) Int. Cl.: G05B 19/4065

(54) **CUTTING SYSTEM**

(30) Priority: 27.12.2017 JP 2017250641
(71) Applicant: DGSHAPE Corporation, Hamamatsu-shi, Shizuoka 431-2103 (JP)
(72) Inventor: HANAJIMA, Masaki, Hamamatsu-shi, Shizuoka, 431-2103 (JP); SAITO, Koji, Hamamatsu-shi, Shizuoka, 431-2103 (JP); AKIMOTO, Daisuke, Hamamatsu-shi, Shizuoka, 431-2103 (JP)
(74) Representative: Grünecker Patent- und Rechtsanwälte PartG mbB

(57) **Abstract**

A controller (54) includes a first counter (56) that counts an operating time of cutting machines (20A to 20D) in a predetermined unit and a display controller (55) that puts the operating time that has been counted into a doughnut graph (82) and displays the doughnut graph (82) on the display (70) and the display controller (55) displays, if the operating time is less than a predetermined time, the doughnut graph (82) in a first color on the display (70) and displays, if the operating time is the predetermined time or more, the doughnut graph (82) in a second color that is different from the first color on the display (70).

## Description

### CROSS REFERENCE TO RELATED APPLICATIONS

This application claims the benefit of priority to Japanese Patent Application No. 2017-250641 filed on December 27, 2017.

### BACKGROUND OF THE INVENTION

### 1. Field of the Invention

The present invention relates to a cutting system including a cutting machine that produces a crown-shaped crown prosthesis.

### 2. Description of the Related Art

Conventionally, cutting machines that process a workpiece, such as a dental ceramic material, a dental resin material, or the like, into a desired shape to produce a crown prosthesis (which will be also referred to as an artificial tooth, an artificial crown, or the like) have been known. A cutting machine includes a processing tool and a crown prosthesis is produced by performing cutting, polishing, or the like on a workpiece by the processing tool.

As a cutting machine of this type, a cutting machine including an auto tool changer (ATC) that is able to automatically replace a plurality of processing tools which include cutters having different shapes in order to automatically and continuously perform various kinds of processing by one operation is disclosed, for example, in Japanese Laid-open Patent Publication No. 2017-094437.

Incidentally, in recent years, development of cutting machines which include a function of automatically replacing a workpiece that is a processing target and continuously producing crown prostheses has been advanced. In such a cutting machine, using a plurality of processing tools and a plurality of workpieces, a plurality of crown prostheses is continuously produced. For example, an operator sends job data of a plurality of crown protheses that the operator desires to produce to the cutting machine as needed, and thereby, continuously operates the cutting machine. Using the known cutting machine, however, the operator is not able to confirm how much an operation has progressed with respect to the plurality of job data that have been sent to the cutting machine.

### SUMMARY OF THE INVENTION

In view of the above-described points, preferred embodiments of the present invention provide cutting systems in each of which an operator is able to more accurately confirm an operation status of a cutting machine.

A cutting system according to a preferred embodiment of the present invention includes a cutting machine including a plurality of processing tools that process a workpiece to produce a crown prosthesis and a tool magazine that accommodates the plurality of processing tools, a display that displays an operation status of the cutting machine, and a controller that transmits job data of the crown prosthesis to the cutting machine, the controller includes a first counter that counts an operating time of the cutting machine in a predetermined unit and a display controller that puts the counted operating time into a first graph and displays the first graph on the display, and the display controller displays, if the operating time is less than a predetermined time, the first graph in a first color on the display and displays, if the operating time is the predetermined time or more, the first graph in a second color that is different from the first color on the display.

In a cutting system according to a preferred embodiment of the present invention, the display displays the operation status of the cutting machine. Herein, the display controller puts the counted operating time into a first graph (for example, a doughnut graph) and displays the first graph on the display. Therefore, an operator can easily confirm the operating time of the cutting machine in a predetermined unit (for example, on a daily basis, a weekly basis, a monthly basis, or a yearly basis) by checking the first graph. Furthermore, when the first graph is displayed in the first color (for example, red), the operator can easily confirm that the operating time of the cutting machine is less than the predetermined time. Also, when the first graph is displayed in the second color (for example, blue), the operator can easily confirm that the operating time of the cutting machine is the predetermined time or more. As described above, the operator can more accurately confirm the operation status of the cutting machine by a simple method of checking the first graph that is displayed on the display.

According to preferred embodiments of the present invention, cutting systems allow operators to more accurately confirm an operation status of a cutting machine.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a schematic diagram illustrating a configuration example of a cutting system according to a preferred embodiment of the present invention.
FIG. 2 is a perspective view of a cutting machine according to a preferred embodiment of the present invention.
FIG. 3 is a plan view of a workpiece to which an adaptor is attached according to a preferred embodiment of the present invention.
FIG. 4 is a perspective view of a cutting machine according to a preferred embodiment of the present invention, illustrating a state in which a door of a conveying device is open.
FIG. 5 is a plan view of a conveyor according to a preferred embodiment of the present invention, illustrating a state in which a workpiece is gripped by the conveyor.
FIG. 6 is a front view of a cutting machine according to a preferred embodiment of the present invention.
FIG. 7 is a perspective view of a tool magazine according to a preferred embodiment of the present invention.
FIG. 8 is a perspective view of a rotation supporting member and a clamp according to a preferred embodiment of the present invention.
FIG. 9 is a block diagram of an operation terminal according to a preferred embodiment of the present invention.
FIG. 10 is a view illustrating an example of a confirmation screen that is displayed on a display according to a preferred embodiment of the present invention and a state in which an operation status of a cutting machine is displayed on a weekly basis.
FIG. 11 is a view illustrating an example of the confirmation screen that is displayed on the display according to a preferred embodiment of the present invention and a state in which operation statuses of four cutting machines are listed and displayed.
FIG. 12 is a view illustrating an example of the confirmation screen that is displayed on the display according to a preferred embodiment of the present invention and a state in which a use time of a cutting tool and a ratio of the use time are displayed.
FIG. 13 is a view illustrating an example of the confirmation screen that is displayed on the display according to a preferred embodiment of the present invention and a state in which a screen via which various settings are performed is displayed.
FIG. 14 is a view illustrating an example of the confirmation screen that is displayed on the display according to a preferred embodiment of the present invention and a state in which a calendar is displayed.
FIG. 15 is a view illustrating an example of the confirmation screen that is displayed on the display according to a preferred embodiment of the present invention and a state in which a calendar is displayed.
FIG. 16 is a view illustrating an example of the confirmation screen that is displayed on the display according to a preferred embodiment of the present invention and a state in which an operation status of a cutting machine is displayed on a monthly basis.
FIG. 17 is a view illustrating an example of the confirmation screen that is displayed on the display according to a preferred embodiment of the present invention and a state in which a calendar is displayed.
FIG. 18 is a view illustrating an example of the confirmation screen that is displayed on the display according to a preferred embodiment of the present invention and a state in which an operation status of a cutting machine is displayed on a daily basis.

### DETAILED DESCRIPTION OF THE PREFERRED EMBODIMENTS

Cutting systems according to preferred embodiments of the present invention will be described below with reference to the accompanying drawings. Note that, as a matter of course, the preferred embodiments described herein are not intended to be particularly limiting the present invention. Also, members and portions that have the same function are denoted by the same reference character and redundant description will be omitted or simplified, as appropriate.

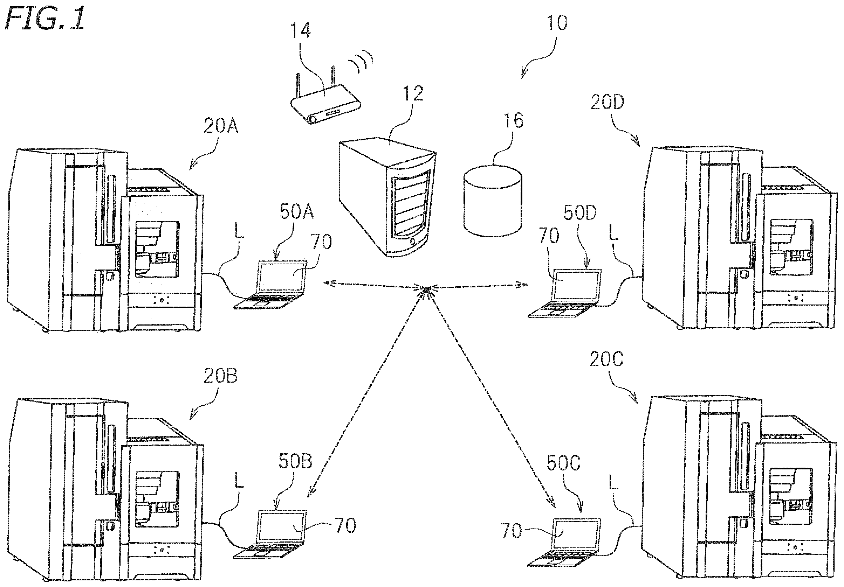

As illustrated in FIG. 1, a cutting system 10 (which will be hereinafter referred to as a "system 10" as appropriate) includes cutting machines 20A to 20D, operation terminals 50A to 50D, a server 12, and a router 14.

Each of the cutting machines 20A to 20D and a corresponding one of the operation terminals 50A to 50D preferably are coupled to one another via a line L such that a wired communication therebetween is possible, for example. Note that each of the cutting machines 20A to 20D and a corresponding one of the operation terminals 50A to 50D are also able to wirelessly communicate with one another. The operation terminals 50A to 50D and the server 12 are coupled with one another so as to be able to mutually communicate information by a wireless communication network provided via the router 14. The server 12 is a host computer that serves as a trunk of each processing of the system 10. The server 12 includes a large-capacity storage 16 that stores information. Note that, in this preferred embodiment, each of the number of the cutting machines 20A to 20D and the number of the operation terminals 50A to 50D is four, but may be any number of one to three and also may be five or more.

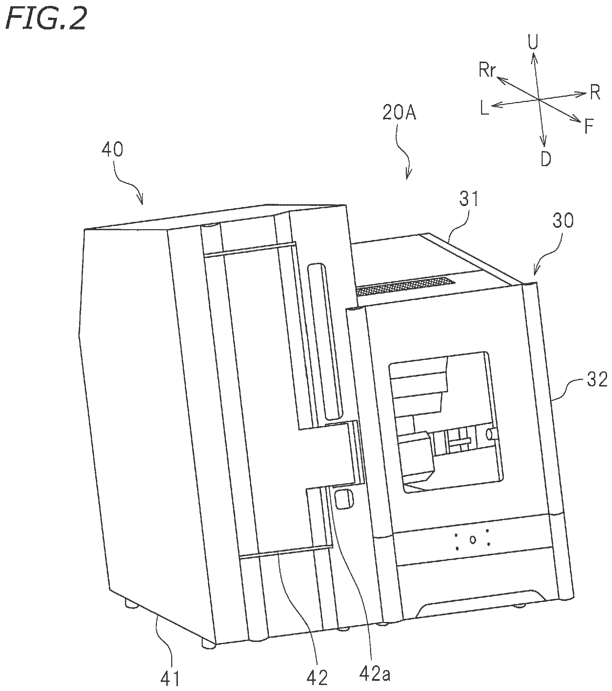

Detail configurations of the cutting machines 20A to 20D will be described below. Note that basic configurations of the cutting machines 20A to 20D are similar to one another, and therefore, a configuration of the cutting machine 20A will be described and, for the cutting machines 20B to 20D, similar description to that of the cutting machine 20A will be omitted. FIG. 2 is a perspective view of the cutting machine 20A. In the following description, when the cutting machine 20A is viewed from front, a direction away from the cutting machine 20A is forward, a direction approaching to the cutting machine 20A is rearward. Left, right, up, and down mean left, right, up, down when the cutting machine 20A is viewed from front, respectively. Also, symbols F, Rr, L, R, U, and D in the drawings mean front, rear, left, right, up, and down, respectively. In this preferred embodiment, when it is assumed that axes that are orthogonal to one another are an X axis, a Y axis, and a Z axis, the cutting machine 20A is arranged on a plane surface formed by the X axis and the Y axis. In this case, the X axis is an axis that extends in a front-rear direction. The Y axis is an axis that extends in a left-right direction. The Z axis is an axis that extends in an up-down direction. Also, symbols θx, θy, and θz indicate rotational directions about the X axis, the Y axis, and the Z axis, respectively. However, the above described directions are merely directions that have been set for convenience of description, do not limit a setting mode of the cutting machine 20A, and do not limit the present invention.

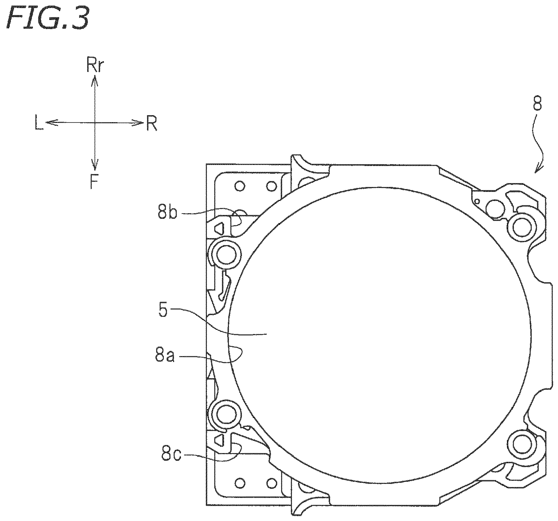

The cutting machine 20A is a device in which a plurality of workpieces 5 (see FIG. 3) is accommodated and which selects one workpiece 5 from the plurality of accommodated workpieces 5 and performs cutting on the selected workpiece 5. For example, the cutting machine 20A processes the workpiece 5 to produce a crown prosthesis. A shape of the workpiece 5 is, for example, a disk shape. The workpiece 5 is formed of various types of materials, such as zirconia, wax, a poly methyl methacrylate (PMMA) resin, a hybrid resin, a polyether ether ketone (PEEK) resin, plaster, or the like. When zirconia is used as a material of the workpiece 5, for example, half-sintered zirconia is used. However, the shape and materials of the workpiece 5 are not particularly limited.

As illustrated in FIG. 3, in this preferred embodiment, an adaptor 8 is attached to the workpiece 5. With the adaptor 8 attached to the workpiece 5, the workpiece 5 is accommodated in the cutting machine 20A and is processed. In this case, an insertion hole 8a is formed in a central portion of the adaptor 8. The workpiece 5 is inserted in the insertion hole 8a, and thus, the workpiece 5 is attached to the adaptor 8. In the following description, the workpiece 5 is the workpiece 5 to which the adaptor 8 is attached. The workpiece 5 includes the adaptor 8 that is attached to the workpiece 5, as well as the workpiece 5 itself.

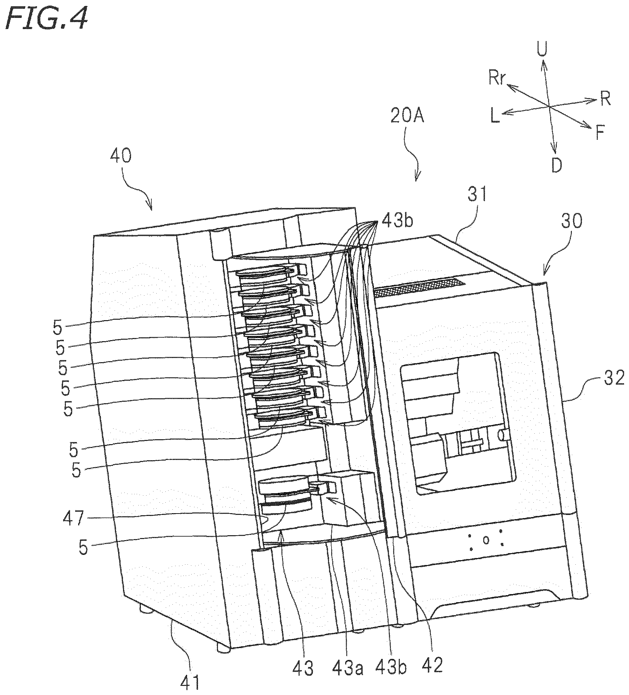

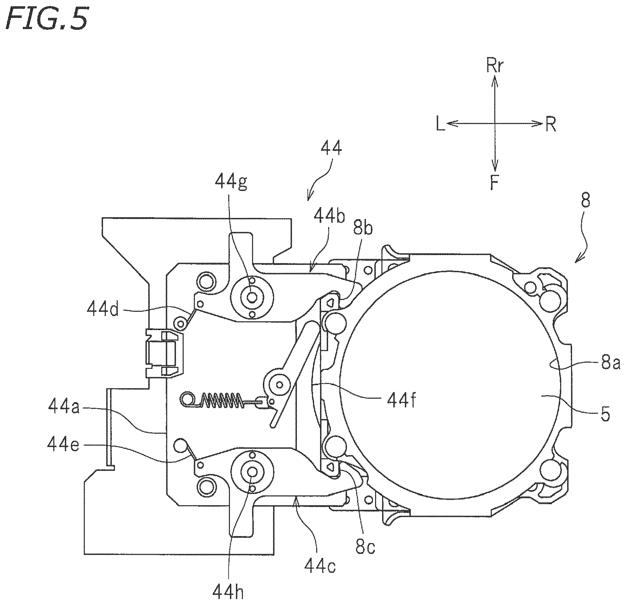

As illustrated in FIG. 2, the cutting machine 20A includes a processing device 30 and a conveying device 40. As illustrated in FIG. 4, the plurality of workpieces 5 is accommodated in the conveying device 40. The conveying device 40 is a device that selects one workpiece 5 from the plurality of workpieces 5 that are accommodated and conveys the selected workpiece 5 to the processing device 30. The conveying device 40 preferably has a box shape, for example. In this case, the conveying device 40 includes a case body 41, a door 42, a stocker 43, and a conveyor 44 (see FIG. 5).

The case body 41 preferably has a box shape and has a space inside. The space inside the case body 41 is a space in which the stocker 43 in which the plurality of workpieces 5 is accommodated is accommodated. An opening 47 is located in a front portion of the case body 41.

The door 42 is provided in the case body 41 so as to be freely openable and closable. The door 42 is supported by the case body 41 so as to be rotatable with a right end thereof as an axis. As illustrated in FIG. 2, in the door 42, a supporting projection 42a that extends rightward from a right portion thereof is provided and the supporting projection 42a is supported by the case body 41. In this case, the door 42 rotates about the supporting projection 42a as an axis to open and close the opening 47 of the case body 41, as illustrated in FIG. 4. When the opening 47 is opened by the door 42, the space inside the case body 41 is in a state in which the space communicates with outside.

The plurality of workpieces 5 is accommodated in the stocker 43. In this preferred embodiment, the stocker 43 is provided in the door 42. In this preferred embodiment, the stocker 43 includes a stocker body 43a and a plurality of housings 43b. The stocker body 43a has a box shape that extends in the up-down direction and has a space inside.

As illustrated in FIG. 4, in each of the housings 43b, a corresponding one of the workpieces 5 to which the adaptor 8 (see FIG. 3) is attached is accommodated. The plurality of the housings 43b is arranged in the space inside the stocker body 43a. The plurality of housings 43b is aligned in the up-down direction. In this case, each of the housings 43b has a space inside and the workpiece 5 to which the adaptor 8 is attached is accommodated in the inside space. For example, a shape of an inner circumference that defines the space of each of the housings 43b is a shape that corresponds to the adaptor 8. For one housing 43b, one workpiece 5 is accommodated therein. In this preferred embodiment, nine housings 43b are arranged and it is possible to accommodate nine workpieces 5 in the stocker 43, for example. However, the number of the housings 43b is not particularly limited. Also, arrangement positions of the housings 43b are not particularly limited and, for example, some of the housings 43b may be arranged so as to be aligned in the left-right direction.

As illustrated in FIG. 5, the conveyor 44 takes out the workpiece 5 that is accommodated in the corresponding housing 43b of the stocker 43 from the stocker 43. The conveyor 44 conveys the workpiece 5 that has been taken out to the processing device 30. More specifically, the conveyor 44 attaches the workpiece 5 that has been taken out from the housing 43b of the stocker 43 to a clamp 36, which will be described later. Also, the conveyor 44 detaches the workpiece 5 from the clamp 36 and conveys the workpiece 5 to the conveying device 40. The conveyor 44 accommodates the workpiece 5 that has been detached in the housing 43b of the stocker 43. The conveyor 44 is able to attach and detach the workpiece 5 to and from the corresponding housing 43b of the stocker 43. The conveyor 44 is an example of a conveying mechanism. Although not illustrated, the conveyor 44 is arranged in the space inside the case body 41. The conveyor 44 is controlled by a motor, which is not illustrated, and is movable in the case body 41 and a case body 31 of the processing device 30, which will be described later. The conveyor 44 includes a conveyor main body 44a, a first hook 44b, a second hook 44c, a first spring 44d, and a second spring 44e.

The conveyor main body 44a is a plate member. The first hook 44b and the second hook 44c are members that sandwich the adaptor 8 therebetween. The first hook 44b and the second hook 44c are arranged so as to oppose to one another in the front-rear direction. The first hook 44b is supported so as to be rotatable with a first shaft 44g provided in the conveyor main body 44a as an axis. A tip portion of the first hook 44b engages with a first engagement projection 8b of the adaptor 8. The second hook 44c is supported so as to be rotatable with a second shaft 44h provided in the conveyor main body 44a as an axis. A tip portion of the second hook 44c engages with a second engagement projection 8c of the adaptor 8.

The first spring 44d applies an elastic force to the first hook 44b. The first spring 44d applies an elastic force in a direction in which the tip portion of the first hook 44b moves toward the second hook 44c. The second spring 44e applies an elastic force to the second hook 44c. The second spring 44e applies an elastic force in a direction in which the tip portion of the second hook 44c moves toward the first hook 44b.

Next, the processing device 30 will be described. The processing device 30 processes the workpiece 5 that has been conveyed from the conveying device 40 to produce a crown prosthesis. For example, the processing device 30 preferably has a box shape and a portion of the processing device 30 communicates with the conveying device 40. As illustrated in FIG. 2, the processing device 30 includes the case body 31 and a cover 32. The case body 31 preferably has a box shape and has a space inside. A front portion of the case body 31 is opened. The cover 32 is supported by the case body 31 so as to freely open and close an opening of the case body 31.

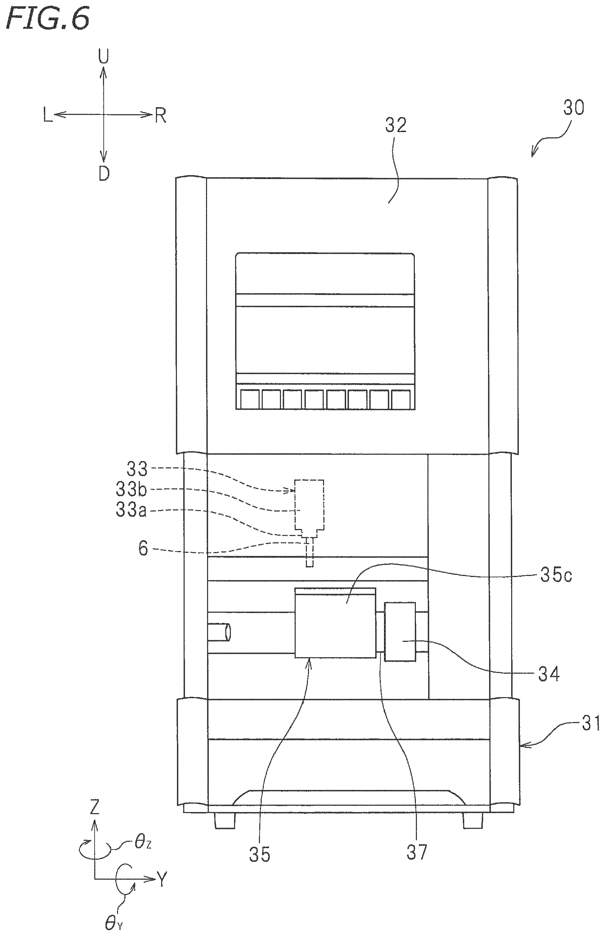

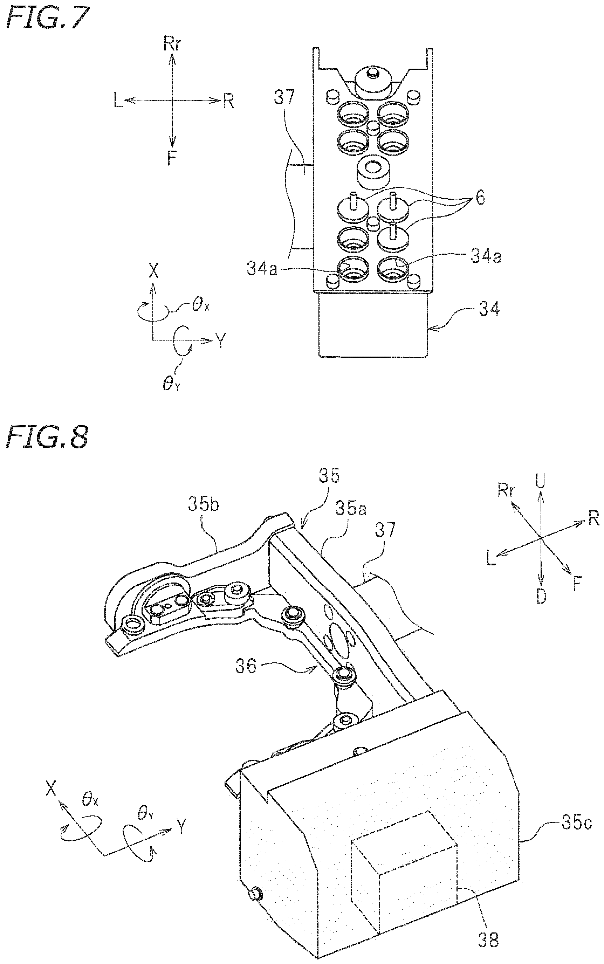

As illustrated in FIG. 6, the processing device 30 includes a spindle 33, a tool magazine 34 (see also FIG. 7), a rotation supporting member 35 (see also FIG. 8), and the clamp 36 (see FIG. 8). Note that, in FIG. 6, a state in which the cover 32 is open is illustrated.

The spindle 33 processes the workpiece 5 by causing a processing tool 6 to rotate. The spindle 33 includes a gripper 33a and a rotary 33b. The gripper 33a grips an upper end portion of the processing tool 6. Examples of the processing tool 6 include a tool that cuts the workpiece 5 and a tool that polishes the workpiece 5.

The rotary 33b causes the processing tool 6 that is gripped by the gripper 33a to rotate. The rotary 33b extends in the up-down direction. In this case, a motor, which is not illustrated, is coupled to the rotary 33b. The rotary 33b is rotatable about the Z axis θz due to driving of the motor. Accompanied with rotation of the rotary 33b, the processing tool 6 that is gripped by the gripper 33a rotates about the Z axis θz. Also, the rotary 33b is configured so as to move in the left-right direction and the up-down direction by a first driving member (not illustrated).

As illustrated in FIG. 7, the tool magazine 34 is capable of accommodating the plurality of processing tools 6. The tool magazine 34 preferably has a box shape. A plurality of holes 34a that accommodate the processing tools 6 is provided in an upper surface of the tool magazine 34. Each of the processing tools 6 is inserted through a corresponding one of the holes 34a in a state in which an upper portion of the processing tool 6 is exposed. In replacing the processing tool 6 to another one, the processing tool 6 that is gripped by the gripper 33a is returned to the hole 34a. Then, the spindle 33 is caused to move to a position above one of the processing tools 6 which is used next and the gripper 33a grips an upper end of the processing tool 6 that is located under the gripper 33a.

As illustrated in FIG. 6, a rotary shaft 37 that rotatably supports the rotation supporting member 35 is provided in the tool magazine 34. The rotary shaft 37 extends in the left-right direction and is connected to the rotation supporting member 35. A second driving member (not illustrated) is provided in the tool magazine 34. The rotary shaft 37 is configured to as to be rotatable about the Y axis θy by the second driving member. The rotary shaft 37 rotates about the Y axis θy, and thus, the rotation supporting member 35 rotates about the Y axis θy.

As illustrated in FIG. 8, the rotation supporting member 35 rotatably supports the clamp 36. The rotation supporting member 35 preferably has a substantial U-shape in planar view. The rotation supporting member 35 is connected to the rotary shaft 37 and includes a first portion 35a that extends in the front-rear direction, a second portion 35b that extends from a rear end of the first portion 35a leftward, and a third portion 35c that extends from a front end of the first portion 35a leftward. The clamp 36 is rotatably supported by the second portion 35b and the third portion 35c. A motor 38 that causes the clamp 36 to rotate about the X axis θx is provided in the third portion 35c.

The clamp 36 is a member that holds the adaptor 8. The clamp 36 preferably has a substantial C-shape in planar view. The clamp 36 holds the adaptor 8 that has been conveyed by the conveyor 44 of the conveying device 40. In this preferred embodiment, processing is performed on the workpiece 5 that is held by the clamp 36.

The cutting machine 20A controls the first driving member, the second driving member, the spindle 33, and the conveyor 44, based on job data of a crown prosthesis, and produces the crown prosthesis. The cutting machine 20A is capable of automatically replacing the processing tool 6 and automatically replacing the workpiece 5.

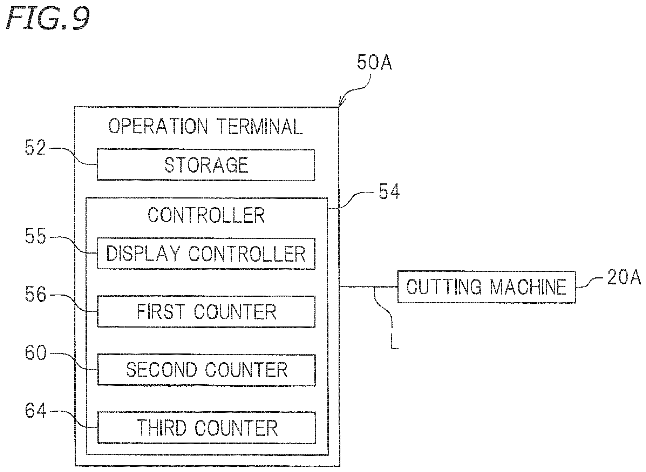

Next, detailed configurations of the operation terminals 50A to 50D will be described. Note that basic configurations of the operation terminals 50A to 50D are similar to one another, and therefore, a configuration of the operation terminal 50A will be described and, for operation terminals 50B to 50D, similar description to that of the operation terminal 50A will be omitted. The operation terminal 50A includes a computer mounted therein. As illustrated in FIG. 9, the operation terminal 50A includes a storage 52 that stores information and a controller 54 that executes predetermined processing in accordance with a program. The controller 54 is coupled to the cutting machine 20A. The controller 54 transmits the job data of the crown prosthesis to the cutting machine 20A. Information (for example, the operating time of the cutting machine 20A, the use time of the processing tool 6, the processing time of the workpiece 5, or the like) of an operation status of the cutting machine 20A is transmitted from the cutting machine 20A to the controller 54. The information of the operation status of the cutting machine 20A is transmitted to the server 12 and is stored in the storage 16. The information of the operation status of the cutting machine 20A is transmitted to the operation terminals 50B to 50D via the server 12. The operation terminal 50A includes a display 70 (see FIG. 1) including a display or the like and input device (not illustrated) including a keyboard, a touch panel, a mouse, or the like. The display 70 is able to display operation statuses of the cutting machines 20A to 20D.

As illustrated in FIG. 9, the controller 54 is configured or programmed to include a display controller 55, a first counter 56, a second counter 60, and a third counter 64. The functions of these elements of the controller 54 may be implemented by a program. This program may be read from a recording medium such as a CD or a DVD. This program may be downloaded through the Internet. The functions of the elements of the controller 54 may be implemented by, for example, processor(s) and/or circuit(s). Specific control of each of the elements of the controller 54 described above will be described later.

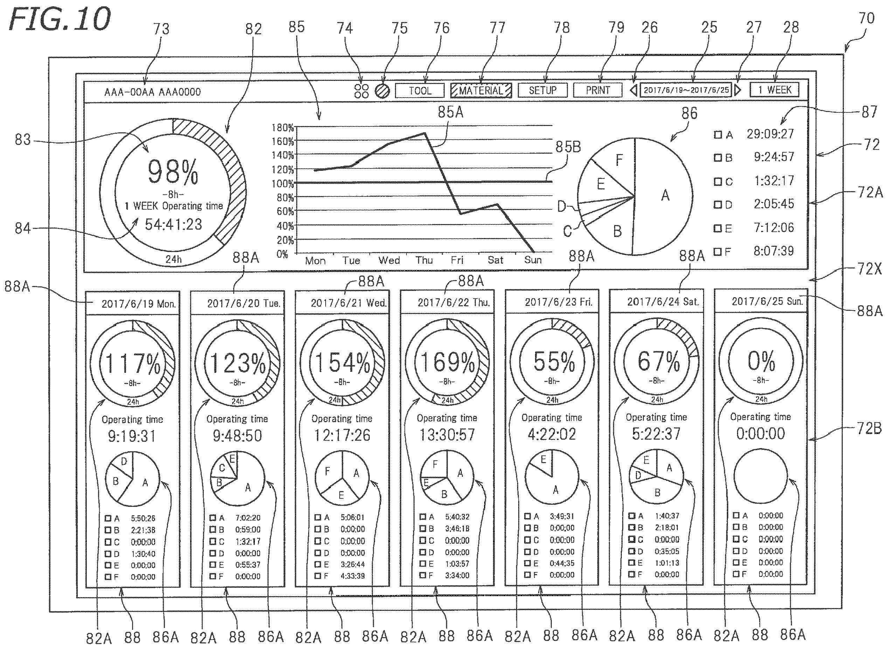

FIG. 10 illustrates an example of a screen that is displayed on the display 70. As illustrated in FIG. 10, in the system 10, the operation status of each of the cutting machines 20A to 20D can be displayed on the display 70 of a corresponding one of the operation terminals 50A to 50D. The display 70 includes a screen 72. A predetermined application is executed, and thus, an operation status confirmation screen 72X (which will be hereinafter referred to as a confirmation screen 72X) is displayed on the screen 72.

As illustrated in FIG. 10, a section 73 in which a name of a cutting machine among the cutting machines 20A to 20D, which is displayed on the confirmation screen 72X, is provided in an upper left side of an upper portion 72A of the confirmation screen 72X. In an example illustrated in FIG. 10, for example, the operation status of the cutting machine 20A is displayed. Note that even the operation terminal 50A that is coupled to the cutting machine 20A is also able to display the operation statuses of the cutting machines 20B to 20D on the confirmation screen 72X.

As illustrated in FIG. 10, a doughnut graph 82 indicating an operating time of the cutting machine 20A on a weekly basis is provided in a left side of the upper portion 72A of the confirmation screen 72X. The first counter 56 counts the operating times of the cutting machines 20A to 20D on a weekly basis. The display controller 55 puts the operating time on a weekly basis which has been counted by the first counter 56 into the doughnut graph 82 and displays the doughnut graph 82 on the confirmation screen 72X of the display 70. If the operating time that has been counted by the first counter 56 is less than a predetermined time, the display controller 55 displays the doughnut graph 82 in the first color (for example, red) on the confirmation screen 72X of the display 70. If the operating time that has been counted by the first counter 56 is the predetermined time or more, the display controller 55 displays the doughnut graph 82 in the second color (for example, blue) which is different from the first color on the confirmation screen 72X of the display 70. As will be described later, the above described predetermined time can be arbitrarily set by an operator.

As illustrated in FIG. 10, a first display area 83 in which an operation ratio that is a ratio (a percentage) of the operating time on a weekly basis which has been counted by the first counter 56 to the predetermined time is displayed is provided in the left side of the upper portion 72A of the confirmation screen 72X. The first display area 83 is provided so as to be aligned with the doughnut graph 82. In this case, the first display area 83 is provided inside the doughnut graph 82. The display controller 55 displays the above described operation ratio so as to be aligned with the doughnut graph 82 in the first display area 83 of the confirmation screen 72X of the display 70. In the example illustrated in FIG. 10, if the operation ratio is less than 100%, the display controller 55 displays the doughnut graph 82, for example, in red and, if the operation ratio is 100% or more, the display controller 55 displays the doughnut graph 82, for example, in blue.

As illustrated in FIG. 10, a second display area 84 in which a total operating time on a weekly basis which has been counted by the first counter 56 is displayed is provided in the left side of the upper portion 72A of the confirmation screen 72X. The second display area 84 is provided so as to be aligned with the doughnut graph 82. In this case, the second display area 84 is provided inside the doughnut graph 82. The second display area 84 is provided under the first display area 83. The display controller 55 displays the above described total operating time so as to be aligned with the doughnut graph 82 in the second display area 84 of the confirmation screen 72X of the display 70.

As illustrated in FIG. 10, a third display area 85 in which a line graph 85A and a reference line 85B are displayed is provided in a central portion of the upper portion 72A of the confirmation screen 72X. The line graph 85A indicates an operation ratio that is a ratio of an operating time on a daily basis to a predetermined time on a weekly basis. In the example illustrated in FIG. 10, an abscissa corresponds to a day of week (date) and an ordinate corresponds to the operation ratio. The reference line 85B corresponds to the predetermined time. The reference line 85B is displayed so as to overlap with the line graph 85A. The display controller 55 displays the line graph 85A and the reference line 85B in the third display area 85 of the confirmation screen 72X of the display 70. The line graph 85A is displayed, for example, in blue and the reference line 85B is displayed, for example, in red.

As illustrated in FIG. 10, a pie chart 86 that indicates a processing ratio that is a ratio of the processing time of each of the workpieces 5 which has been counted to a total time of the processing times of the plurality of workpieces 5 on a weekly basis, which have been counted, and a fourth display area 87 in which each of the processing times of the workpieces 5 is displayed are provided in a right side of the upper portion 72A of the confirmation screen 72X. The pie chart 86 and the fourth display area 87 are aligned. The second counter 60 counts each of the processing times of the plurality of workpieces 5 on a weekly basis. The display controller 55 puts the above described processing ratio into the pie chart 86 and displays the pie chart 86 on the confirmation screen 72X of the display 70. The display controller 55 displays each of the processing times of the workpieces 5 on a weekly basis in the fourth display area 87 of the confirmation screen 72X of the display 70. Note that, in the example illustrated in FIG. 10, the workpieces 5 that are used are denoted by A to F, but the workpieces 5 that are used may be denoted by names of materials.

As illustrated in FIG. 10, a plurality of fifth display areas 88 in which doughnut graphs 82A of the cutting machine 20A on a daily basis in a specific week or the like are displayed is provided in a lower portion 72B of the confirmation screen 72X so as to be aligned. In the example illustrated in FIG. 10, seven fifth display areas 88 are provided but the number of the fifth display areas 88 is not particularly limited. Each of dates of the specific week is displayed in a corresponding one of upper portions 88A of the fifth display areas 88. The first counter 56 counts the operating times of the cutting machines 20A to 20D on a daily basis. The display controller 55 puts the operating time on a daily basis, which has been counted by the first counter 56, into the doughnut graph 82A and displays the doughnut graph 82A in the fifth display area 88 of the confirmation screen 72X of the display 70. The display controller 55 displays an operation ratio that is a ratio (a percentage) of the operating time on a daily basis, which has been counted by the first counter 56, to a predetermined time so as to be aligned with the doughnut graph 82A in the fifth display area 88 of the confirmation screen 72X of the display 70. The display controller 55 displays a total operating time on a daily basis, which has been counted by the first counter 56, so as to be aligned with the doughnut graph 82A in the fifth display area 88 of the confirmation screen 72X of the display 70.

The second counter 60 counts each of the processing times of the plurality of workpieces 5 on a daily basis. The display controller 55 puts a processing ratio that is a ratio of the processing time of each of the workpieces 5, which has been counted, to a total time of the processing times of the plurality of workpieces 5, which have been counted, in a pie chart 86A and displays the pie chart 86A in the fifth display area 88 of the confirmation screen 72X of the display 70. The display controller 55 displays each of the processing times of the workpieces 5 on a daily basis in a corresponding one of the fifth display areas 88 of the confirmation screen 72X of the display 70.

As illustrated in FIG. 10, for example, in a case in which the operator confirms an operation status of the cutting machine 20A on a weekly basis on June 24, when the operation status of the cutting machine 20A of the day (that is, a day on which the operator browses the confirmation screen 72X) is displayed in the lower portion 72B of the confirmation screen 72X, for example, the display controller 55 displays a background of the fifth display area 88 in which the operation status is displayed in blue and displays backgrounds of the fifth display areas 88 in which the operation statuses of the cutting machine 20A in the other dates are displayed in white. Also, if, in a case in which the operation status of the cutting machine 20A of the day is displayed, an error has occurred in the cutting machine 20A, for example, the display controller 55 displays the background of the fifth display area 88 in which the operation status is displayed in red. As described above, the display controller 55 may be configured to display, in a case in which the cutting machine 20A is in operation on the day, a case in which an error has occurred in the cutting machine 20A on the day, a case in which an operation has ended already on or before the day, and a case in which an operation is started on or after the day, the background of the fifth display area 88 in different colors. For example, the display controller 55 displays, in the case in which the operation has ended already on or before the day, the background of the fifth display area 88 in white and displays, in the case in which the operation is started on or after the day, the background of the fifth display area 88 in gray.

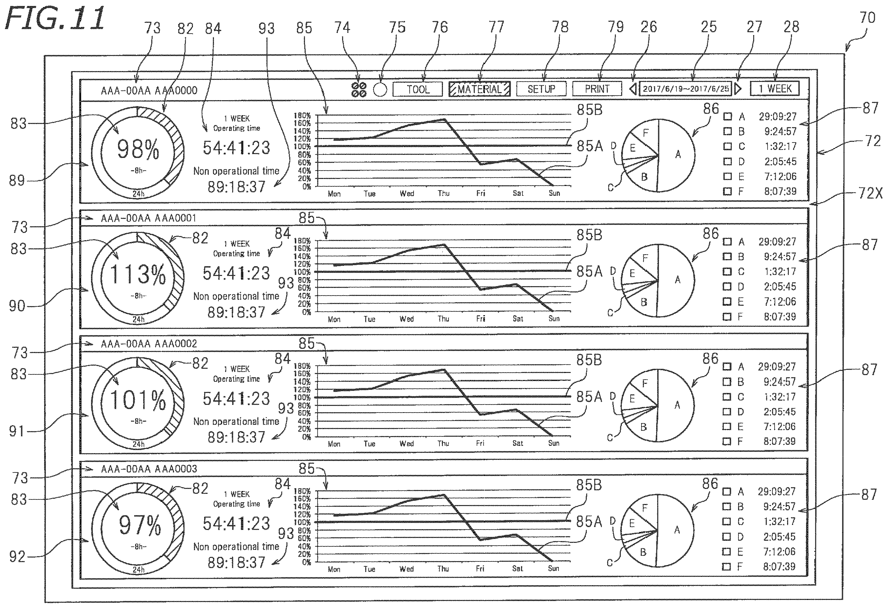

As illustrated in FIG. 10, in a top center of the upper portion 72A of the confirmation screen 72X, two icons 74 and 75 are aligned side by side. An operation button that is used for simultaneously displaying the plurality of cutting machines 20A to 20D on the confirmation screen 72X is incorporated in the icon 74. An operation button that is used to display one of the plurality of cutting machines 20A to 20D on the confirmation screen 72X is incorporated in the icon 75. The operator is able to select one of the icons 74 and 75. That is, each of the icons 74 and 75 has a function of switching of display of the cutting machines 20A to 20D that are displayed on the confirmation screen 72X. By selecting one of the icons 74 and 75 by an input device (not illustrated), for example, the icon that has been selected is displayed in blue and the icon that has not been selected is displayed in gray. FIG. 10 illustrates an example of the confirmation screen 72X that is displayed when the icon 75 is pressed by the input device (not illustrated). FIG. 11 illustrates an example of the confirmation screen 72X that is displayed when a tab 76 is pressed by the input device.

As illustrated in FIG. 11, in the confirmation screen 72X, a sixth display area 89 in which the operation status of the cutting machine 20A is displayed, a seventh display area 90 in which the operation status of the cutting machine 20B is displayed, an eighth display area 91 in which the operation status of the cutting machine 20C is displayed, and a ninth display area 92 in which the operation status of the cutting machine 20D is displayed are provided. The sixth to ninth display areas 89 to 92 are aligned in the up-down direction. The operation statuses of the cutting machines 20A to 20D that correspond to the upper portion 72A of the confirmation screen 72X of FIG. 10 are listed and displayed in the sixth to ninth display areas 89 to 92 by the display controller 55, respectively. For example, the display controller 55 lists and displays the doughnut graph 82, the line graph 85A, the reference line 85B, the pie chart 86, or the like in each of the sixth to ninth display areas 89 to 92. Note that there may be a case in which the display controller 55 does not display the icons 74 and 75, and tabs 76 to 79, and buttons 25 to 28, which will be described later, in the seventh to ninth display areas 90 to 92. In each of the sixth to ninth display areas 89 to 92, a tenth display area 93 in which a non-operating time of the cutting machines 20A to 20D is provided. The first counter 56 counts the non-operating time of the cutting machines 20A to 20D on a daily basis, weekly basis, and monthly basis. The display controller 55 displays the above described non-operating time in each of the tenth display areas 93 of the sixth to ninth display areas 89 to 92. Note that, in an example illustrated in FIG. 11, the operation statuses of the cutting machines 20A to 20D on a weekly basis are displayed, but the operation statuses of the cutting machines 20A to 20D on a daily basis or monthly basis can be listed and displayed by pressing a button 28, which will be described later.

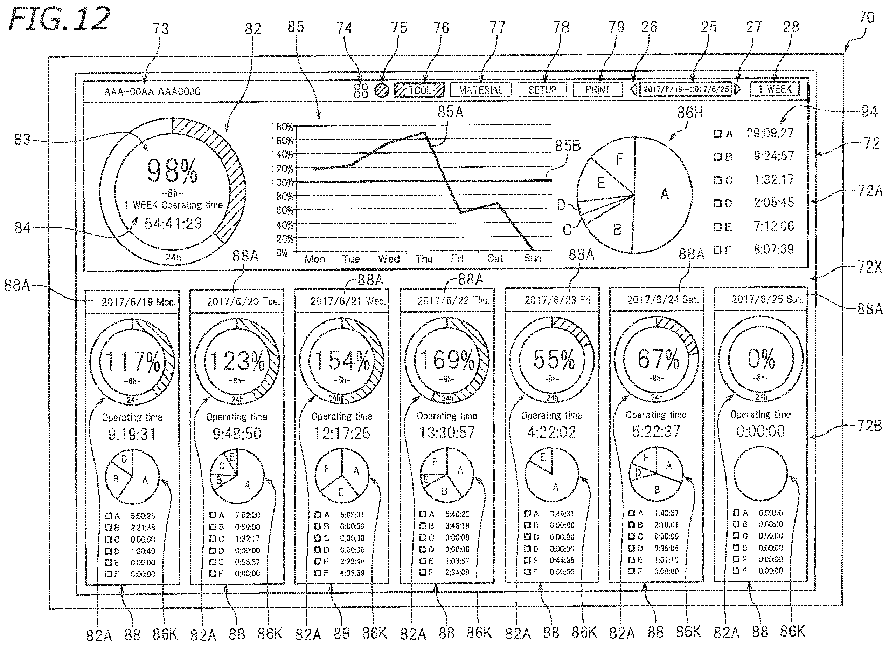

As illustrated in FIG. 10, in the top center of the upper portion 72A of the confirmation screen 72X, the four tabs 76 to 79 are aligned side by side. An operation button that is used to display the use time of each of the plurality of processing tools 6 and a ratio of the use time thereof in the right side of the upper portion 72A of the confirmation screen 72X is incorporated in the tab 76. An operation button that is used to display each of the processing times of the plurality of workpieces 5 and the ratio of the processing time thereof in the right side of the upper portion 72A of the confirmation screen 72X is incorporated in the tab 77. The operator is able to select one of the tabs 76 and 77. That is, each of the tab 76 and the tab 77 has a function of performing switching on which information of the processing tools 6 or the workpieces 5 is displayed on the confirmation screen 72X. By selecting one of the tabs 76 and 77 by the input device (not illustrated), for example, the tab that has been selected is displayed in blue and the tab that has not been selected is displayed in gray. FIG. 10 illustrates an example of the confirmation screen 72X that is displayed when the tab 77 is pressed by the input device (not illustrated). FIG. 12 illustrates an example of the confirmation screen 72X that is displayed when the tab 76 is pressed by the input device.

As illustrated in FIG. 12, in the confirmation screen 72X, similar information to that of FIG. 10 is displayed, except a point that, instead of information of the workpieces 5, information of the processing tools 6 is displayed. In the right side of the upper portion 72A of the confirmation screen 72X, the pie chart 86H that indicates a use ratio that is a ratio of the use time of each of the processing tools 6, which has been counted, to a total time of the use times of the plurality of processing tools 6 on a weekly basis, which have been counted, and an eleventh display area 94 that indicates each of the use times of the processing tools 6 are provided. The pie chart 86H and the eleventh display area 94 are aligned. The third counter 64 counts each of the use times of the plurality of processing tools 6 on a weekly basis. The display controller 55 puts the above described use ratio into the pie chart 86H and displays the pie chart 86H on the confirmation screen 72X of the display 70. The display controller 55 displays each of the use times of the processing tools 6 on a weekly basis in the eleventh display area 94 of the confirmation screen 72X of the display 70.

The third counter 64 counts each of the use times of the plurality of processing tools 6 on a daily basis. The display controller 55 puts a use ratio that is a ratio of the use time of each of the processing tools 6, which has been counted, to a total time of the use times of the plurality of processing tools 6 on a daily basis, which have been counted, into a pie chart 86K and displays the pie chart 86K in the fifth display area 88 of the confirmation screen 72X of the display 70. The display controller 55 displays each of the use times of the processing tools 6 on a daily basis in a corresponding one of the fifth display areas 88 of the confirmation screen 72X of the display 70.

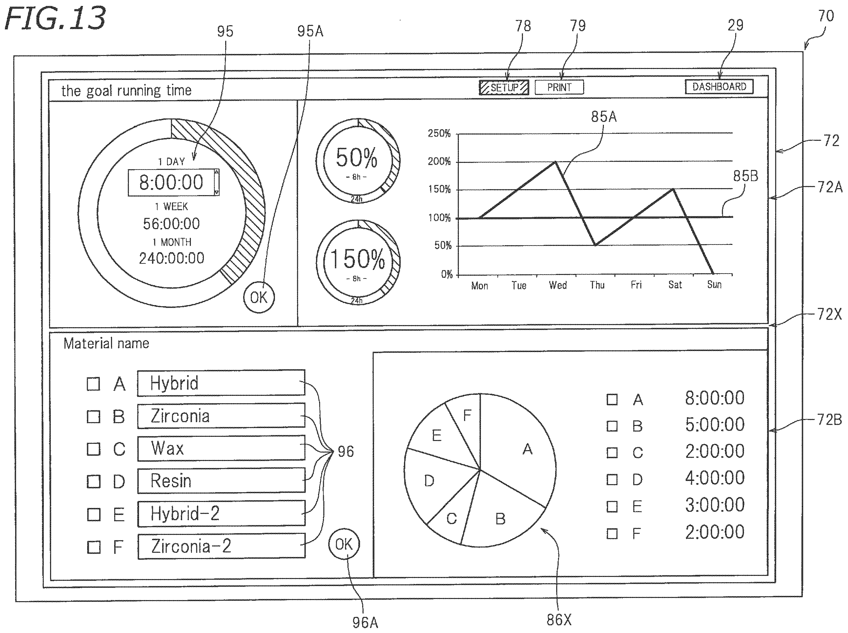

An operation button that is used to switch to a screen via which various settings for each of the cutting machines 20A to 20D are performed is incorporated in the tab 78. An operation button that is used to print contents that are displayed on the confirmation screen 72X is incorporated in the tab 79. FIG. 13 illustrates an example of the confirmation screen 72X that is displayed when the tab 79 is pressed by the input device (not illustrated).

As illustrated in FIG. 13, in a left side of the upper portion 72A of the confirmation screen 72X, an input box 95 in which the operating times of the cutting machines 20A to 20D on a daily basis can be set is provided. The operating time can be set in seconds. The operating time on a daily basis is set by inputting an arbitrary operating time in the input box 95 and pressing an OK button 95A by the input device. When the operating time on a daily basis is set, the operating times on a weekly basis and monthly basis are automatically displayed. Also, in the right side of the upper portion 72A of the confirmation screen 72X, examples of the line graph 85A and the reference line 85B are displayed for the operating time that has been set.

As illustrated in FIG. 13, in a left side of the lower portion 72B of the confirmation screen 72X, an input box 96 to which information of the workpiece 5 that is used in the cutting machines 20A to 20D is input is provided. Setting of the workpiece 5 is completed by inputting a name or a processing possible time of the workpiece 5 to the input box and pressing an OK button 96A by the input device (not illustrated). When the information of the workpiece 5 is input, the processing possible time of the workpiece 5 and a pie chart 86X that indicates a processing possible ratio that is a ratio of the processing possible time of each of the workpieces 5 to a total time of the processing possible times of the plurality of workpieces 5 are displayed in a right side of the lower portion 72B of the confirmation screen 72X. Also, in a top portion of the upper portion 72A of the confirmation screen 72X illustrated in FIG. 13, in addition to the tab 78 and the tab 79, a button 29 is provided. The button 29 has a function of returning display to the confirmation screen 72X (for example, the confirmation screen 72X of FIG. 10) on which the operation statuses of the cutting machines 20A to 20D are displayed. Note that, in an example illustrated in FIG. 13, six input boxes 96 are provided, but the number of the input boxes 96 is not limited thereto.

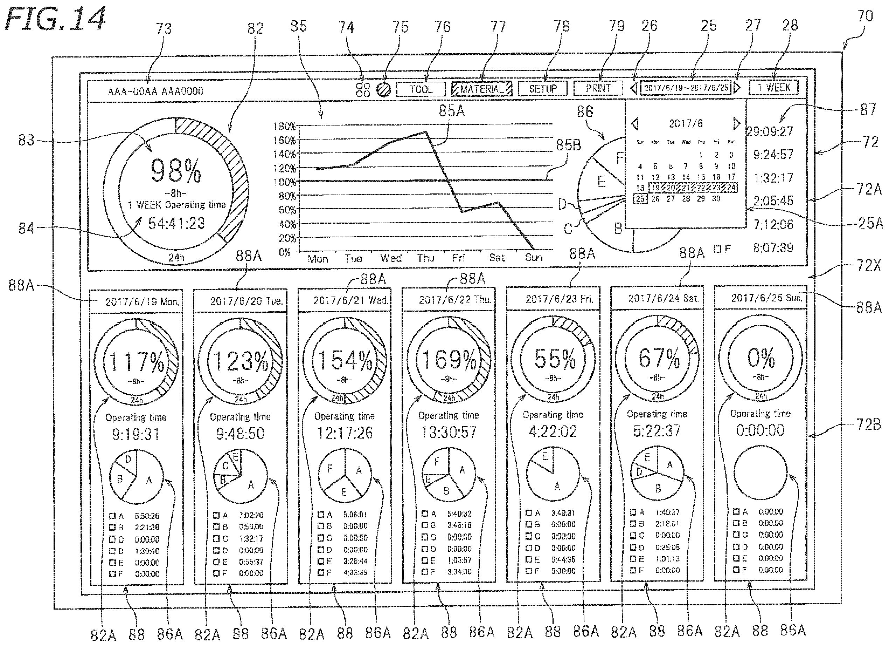

As illustrated in FIG. 10, in a top right of the upper portion 72A of the confirmation screen 72X, various types of buttons 25 to 28 that are used to display the operation statuses of the cutting machines 20A to 20D on a specific date or in a specific period on the confirmation screen 72X are arranged. As illustrated in FIG. 14, the button 25 has a function that is used to display a calendar 25A on the confirmation screen 72X. In this case, the calendar 25A is displayed on the confirmation screen 72X so as to overlap a portion of the pie chart 86. In the calendar 25A, a week that has been selected is inversely displayed. In an example illustrated in FIG. 14, the week that has been selected is indicated by diagonal lines. The button 26 has a function of displaying the operation statuses of the cutting machines 20A to 20D of a previous week (or a previous date or a previous month) of a week (or a date or a month) which is currently displayed on the confirmation screen 72X. The button 27 has a function of displaying the operation statuses of the cutting machines 20A to 20D of a following week (or a following date or a following month) of a week (or a date or a month) which is currently displayed on the confirmation screen 72X.

The button 28 has a function of displaying the operation statuses of the cutting machines 20A to 20D on a weekly basis, a monthly basis, or a daily basis. The operation statuses of the cutting machines 20A to 20D can be switched to those on a weekly basis, a monthly basis, or a daily basis by pressing the button 28 by the input device (not illustrated). As illustrated in FIG. 14, in a case in which the operation statuses of the cutting machines 20A to 20D are displayed on the confirmation screen 72X on a weekly basis, "1 WEEK" is displayed on the button 28. Also, in a case in which the operation statuses of the cutting machines 20A to 20D are displayed on the confirmation screen 72X on a daily basis, "1 DAY" is displayed on the button 28 and, in a case in which the operation statuses of the cutting machines 20A to 20D are displayed on the confirmation screen 72X on a monthly basis, "1 MONTH" is displayed on the button 28.

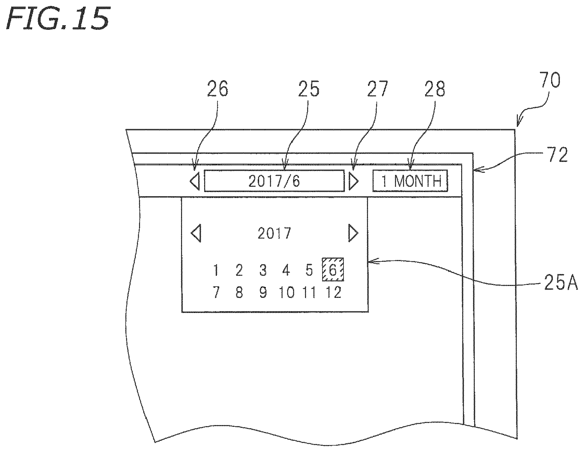

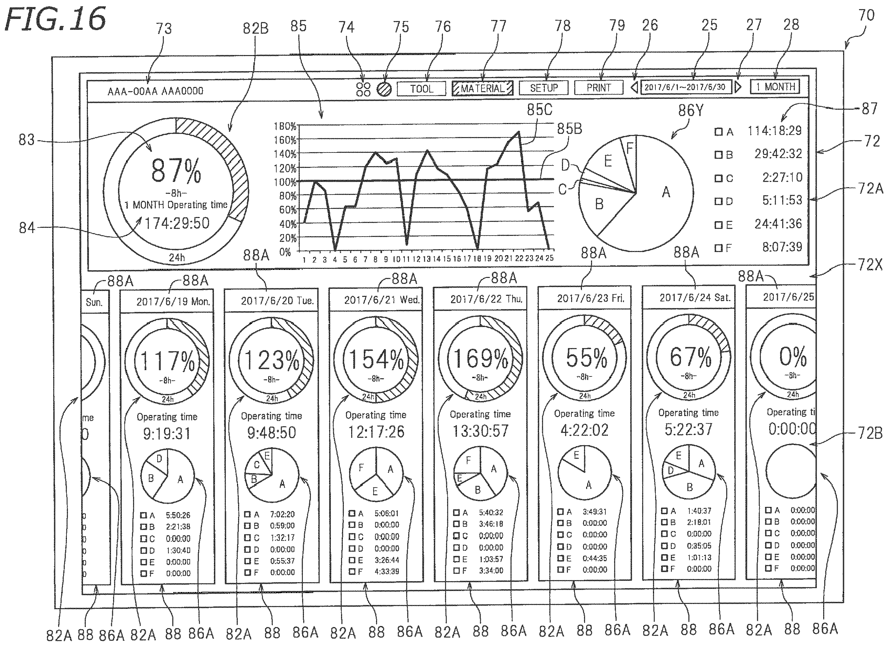

FIG. 15 is a view illustrating the calendar 25A that is displayed on the confirmation screen 72X on a monthly basis. FIG. 16 illustrates the confirmation screen 72X in which the operation status of the cutting machine 20A is displayed on a monthly basis and illustrates the confirmation screen 72X in which the operation status of the cutting machine 20A in June is displayed when June is selected in the calendar 25A illustrated in FIG. 15. As illustrated in FIG. 15, the month that has been selected is inversely displayed. In this case, because June is selected, June in the calendar 25A is inversely displayed. Also, as illustrated in FIG. 16, when display on a monthly basis is selected, a first date and a last date of the month that has been selected are displayed on the button 25.

As illustrated in FIG. 16, in the left side of the upper portion 72A of the confirmation screen 72X, a doughnut graph 82B that indicates an operating time of the cutting machine 20A on a monthly basis is provided. The first counter 56 counts operating times of the cutting machines 20A to 20D on a monthly basis. The display controller 55 puts the operating time on a monthly basis, which has been counted by the first counter 56, into the doughnut graph 82B and displays the doughnut graph 82B on the confirmation screen 72X of the display 70. If the operating time that has been counted by the first counter 56 is less than the predetermined time, the display controller 55 displays the doughnut graph 82B in the first color (for example, red) on the confirmation screen 72X of the display 70. If the operating time that has been counted by the first counter 56 is the predetermined time or more, the display controller 55 displays the doughnut graph 82B in the second color (for example, blue) which is different from the first color on the confirmation screen 72X of the display 70.

As illustrated in FIG. 16, in the first display area 83 that is provided in the left side of the upper portion 72A of the confirmation screen 72X, an operation ratio that is a ratio (a percentage) of the operating time on a monthly basis, which has been counted by the first counter 56, to a predetermined time is displayed. The first display area 83 is provided so as to be aligned with the doughnut graph 82B. In this case, the first display area 83 is provided inside the doughnut graph 82B. The display controller 55 displays the above described operation ratio in the first display area 83 of the confirmation screen 72X of the display 70 such that the operation ratio is aligned with the doughnut graph 82B.

As illustrated in FIG. 16, in the second display area 84 that is provided in the left side of the upper portion 72A of the confirmation screen 72X, a total operating time on a monthly basis, which has been counted by the first counter 56, is displayed. The second display area 84 is aligned with the doughnut graph 82B. In this case, the second display area 84 is provided inside the doughnut graph 82B. The display controller 55 displays the above described total operating time in the second display area 84 of the confirmation screen 72X of the display 70 such that the total operating time is aligned with the doughnut graph 82B.

As illustrated in FIG. 16, in the third display area 85 that is provided in the top center of the upper portion 72A of the confirmation screen 72X, a line graph 85C and the reference line 85B are displayed. The line graph 85C indicates an operation ratio that is a ratio of the operating time on a daily basis to a predetermined time on a monthly basis. The display controller 55 displays the line graph 85C and the reference line 85B in the third display area 85 of the confirmation screen 72X of the display 70. The line graph 85C is displayed, for example, in blue and the reference line 85B is displayed, for example, in red.

As illustrated in FIG. 16, in the right side of the upper portion 72A of the confirmation screen 72X, a pie chart 86Y that indicates a processing ratio that is a ratio of the processing time of each of the workpieces 5, which has been counted, to a total time of the processing times of the plurality of workpieces 5 on a monthly basis, which have been counted, is provided. In the fourth display area 87 that is provided in the right side of the upper portion 72A of the confirmation screen 72X, each of the processing times of the workpieces 5 on a monthly basis is displayed. The pie chart 86Y and the fourth display area 87 are aligned. The second counter 60 counts each of the processing times of the plurality of workpieces 5 on a monthly basis. The display controller 55 puts the above described processing ratio into the pie chart 86Y and displays the pie chart 86Y on the confirmation screen 72X of the display 70. The display controller 55 displays each of the processing times of the workpieces 5 on a monthly basis in the fourth display area 87 of the confirmation screen 72X of the display 70.

Note that, in the example illustrated in FIG. 16, in the right side of the upper portion 72A of the confirmation screen 72X, information of the workpieces 5 is displayed but information of the processing tools 6 may be displayed. In this case, instead of the pie chart 86Y, a pie chart that indicates a ratio of the use time of each of the processing tools 6, which has been counted, to a total time of the use times of the plurality of processing tools 6 on a monthly basis, which have been counted, is provided. Also, in the fourth display area 87, each of the use times of the processing tools 6 on a monthly basis is displayed. The third counter 64 counts each of the use times of the plurality of processing tools 6 on a monthly basis. The display controller 55 puts the above described use ratio into a pie chart and displays the pie chart on the confirmation screen 72X of the display 70. The display controller 55 displays each of the use times of the processing tools 6 on a monthly basis in the fourth display area 87 of the confirmation screen 72X of the display 70.

As illustrated in FIG. 16, in the lower portion 72B of the confirmation screen 72X, the plurality of fifth display areas 88 in which the doughnut graphs 82A of the cutting machine 20A on a daily basis in a specific month or the like is provided so as to be aligned. The fifth display areas 88 can be scrolled in the left-right direction.

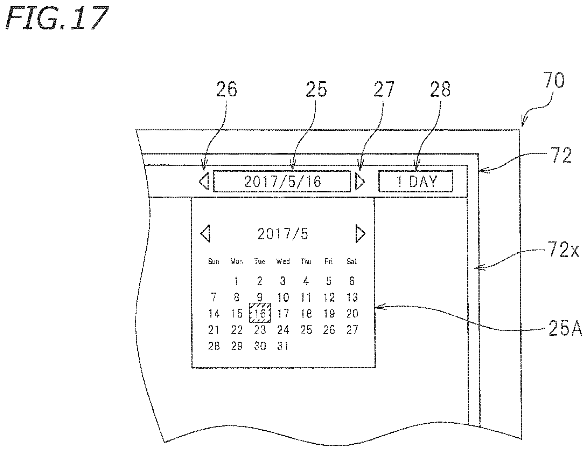

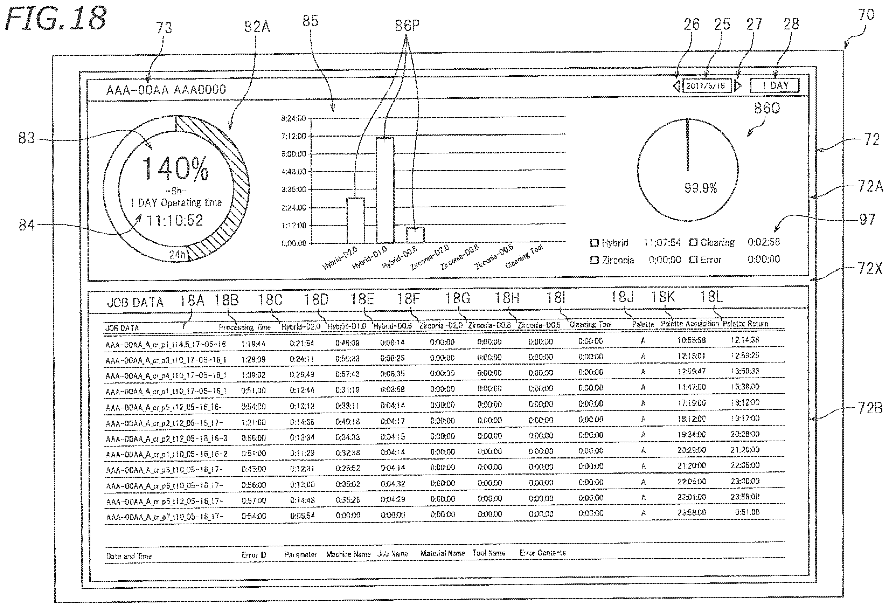

FIG. 17 is a view illustrating the calendar 25A that is displayed on the confirmation screen 72X on a daily basis. FIG. 18 illustrates the confirmation screen 72X on which the operation status of the cutting machine 20A is displayed on a daily basis and illustrates the confirmation screen 72X on which the operation status of the cutting machine 20A on May 16 is displayed when May 16 is selected in the calendar 25A illustrated in FIG. 17. As illustrated in FIG. 17, the date that is selected is inversely displayed. In this case, May 16 is selected, and therefore, May 16 in the calendar 25A is inversely displayed. Also, as illustrated in FIG. 18, when display on a daily basis is selected, a date that has been selected is displayed on the button 25.

As illustrated in FIG. 18, in the left side of the upper portion 72A of the confirmation screen 72X, the doughnut graph 82A that indicates the operating time of the cutting machine 20A on a daily basis is provided. The display controller 55 puts the operating time on a daily basis, which has been counted by the first counter 56, into the doughnut graph 82A and displays the doughnut graph 82A in the left side of the upper portion 72A of the confirmation screen 72X of the display 70. If the operating time that has been counted by the first counter 56 is less than a predetermined time, the display controller 55 displays the doughnut graph 82A in the first color (for example, red) on the confirmation screen 72X of the display 70. If the operating time that has been counted by the first counter 56 is the predetermined time or more, the display controller 55 displays the doughnut graph 82A in the second color (for example, blue) which is different from the first color on the confirmation screen 72X of the display 70. The display controller 55 displays an operation ratio that is a ratio (a percentage) of the operating time on a daily basis, which has been counted by the first counter 56, to the predetermined time in the first display area 83 of the confirmation screen 72X of the display 70 such that the operating time is aligned with the doughnut graph 82A. The display controller 55 displays the total operating time on a daily basis, which has been counted by the first counter 56, so as to be aligned with the doughnut graph 82A in the second display area 84 of the confirmation screen 72X of the display 70.

As illustrated in FIG. 18, a bar chart 86P is displayed in the third display area 85 that is provided in the central portion of the upper portion 72A of the confirmation screen 72X. The bar chart 86P indicates the processing time of each of the workpieces 5 on a daily basis. In an example illustrated in FIG. 18, an abscissa corresponds to a material name of the workpiece 5 and an ordinate corresponds to the processing time. The display controller 55 displays the bar chart 86P in the third display area 85 of the confirmation screen 72X of the display 70. Note that the bar chart 86P may indicate the use times of the processing tools 6 on a daily basis.

As illustrated in FIG. 18, in the right side of the upper portion 72A of the confirmation screen 72X, a pie chart 86Q that indicates a processing ratio that is a ratio of the processing time of each of the workpieces 5, which has been counted, to a total time of the processing times of the plurality of workpieces 5 on a daily basis, which have been counted, and a twelfth display area 97 that indicates each of the processing times of the workpieces 5 on a daily basis are provided. The pie chart 86Q and the twelfth display area 97 are aligned in the up-down direction. The display controller 55 puts the above described processing ratio into the pie chart 86Q and displays the pie chart 86Q on the confirmation screen 72X of the display 70. The display controller 55 displays each of the processing times of the workpieces 5 on a daily basis in the twelfth display area 97 of the confirmation screen 72X of the display 70. Note that, in the example illustrated in FIG. 18, the workpiece 5 that is used is denoted by a material name but the workpiece that is used may be denoted by symbols A to F or the like. Note that the pie chart 86Q may indicate a use ratio that is a ratio of the use time of each of the processing tools 6, which has been counted, to a total time of the use times of the plurality of processing tools 6 on a daily basis, which have been counted. Each of the use times of the processing tools 6 on a daily basis may be indicated in the twelfth display area 97.

As illustrated in FIG. 18, in the lower portion 72B of the confirmation screen 72X, job data of the cutting machine 20A on a specific date is displayed. The display controller 55 causes the confirmation screen 72X of the display 70 to list and display the job data on a daily basis. Each information of a job data name, a total processing time, a processing time per workpiece, an adaptor symbol, an adaptor acquisition time, and an adaptor return time is associated with the job data. In FIG. 18, in the lower portion 72B of the confirmation screen 72X, display sections 18A to 18L in which the above described each information is displayed are provided. Also, in the lower portion 72B of the confirmation screen 72X, error information of an error that has occurred in the cutting machine 20A on the specific date can be displayed for each job data. For the error information, for example, a background is displayed in red. The controller 54 counts the number of crown prostheses that have been produced, based on the job data.

As described above, in the cutting system 10 according to this preferred embodiment, the display 70 displays the operation statuses of the cutting machines 20A to 20D. In this case, the display controller 55 puts the operating time that has been counted into the doughnut graph 82 and displays the doughnut graph 82 on the screen 72 of the display 70. Therefore, the operator can easily confirm the operating times of the cutting machines 20A to 20D by checking the corresponding doughnut graphs 82. Furthermore, when the doughnut graph 82 is displayed in the first color (for example, red), the operator can easily confirm that the operating time of a corresponding one of the cutting machines 20A to 20D is less than the predetermined time. Also, when the doughnut graph 82 is displayed in the second color (for example, blue), the operator can easily confirm that the operating time of a corresponding one of the cutting machines 20A to 20D is the predetermined time or more. In the above described manner, the operator can accurately confirm the operation statuses of the cutting machines 20A to 20D by a simple method of checking the doughnut graph 82 that is displayed on the display 70.

In the cutting system 10 of this preferred embodiment, the display controller 55 displays the ratio of the operating time that has been counted to the predetermined time in the first display area 83 of the confirmation screen 72X of the display 70 such that the ratio is aligned with the doughnut graph 82. Thus, the operator can more accurately confirm the operation statuses of the cutting machines 20A to 20D.

In the cutting system 10 of this preferred embodiment, the display controller 55 displays the doughnut graphs 82 of the cutting machines 20A to 20D on a daily basis in the fifth display areas 88 of the confirmation screen 72X of the display 70 such that the doughnut graphs 82 are aligned in a lateral direction. Thus, the operator can easily compare the operating times for the cutting machines 20A to 20D on a daily basis in a specific period (for example, a specific week or a specific month) with one another.

In the cutting system 10 of this preferred embodiment, the display controller 55 displays the line graph 85A that indicates the ratio of the operating time on a daily basis to the predetermined time on a weekly basis or the line graph 85C that indicates the ratio of the operating time on a daily basis to the predetermined time on a monthly basis, and the reference line 85B that corresponds to the predetermined time in the third display area 85 of the confirmation screen 72X of the display 70. Thus, the operator can easily confirm on which operation date the operating time is the predetermined time or more or less than the predetermined time in a specific period.

In the cutting system 10 of this preferred embodiment, the controller 54 includes the second counter 60 that counts each of the processing times of the plurality of workpieces 5 in a predetermined unit (for example, on a daily basis, a weekly basis, or a monthly basis). The display controller 55 puts the ratio of the processing time of each of the workpieces, which has been counted, to a total time of the processing times, which have been counted, into the pie chart 86, 86A, 86Y and displays the pie chart 86, 86A, 86Y on the confirmation screen 72X of the display 70. Thus, the operator can easily confirm a processing status of each of the workpieces 5 by checking the pie chart 86, 86A, 86Y.

In the cutting system 10 of this preferred embodiment, the display controller 55 displays the pie charts 86A of the workpieces 5 on a daily basis on the confirmation screen 72X of the display 70 such that the pie charts 86A are aligned. Thus, the operator can easily compare the processing times of the workpieces 5 on a daily basis in a specific period.

In the cutting system 10 of this preferred embodiment, the controller 54 includes the third counter 64 that counts each of the use times of the plurality of processing tools 6 in a predetermined unit (for example, on a daily basis, a weekly basis, or a monthly basis). The display controller 55 puts the ratio of the use time of each of the processing tools 6, which has been counted, to the total time of the use times that have been counted, into the pie chart 86H, 86K and displays the pie chart 86H, 86K on the display 70. Thus, the operator can easily confirm a use status of each of the processing tools 6 by checking the pie chart 86H, 86K.

In the cutting system 10 of this preferred embodiment, the display controller 55 displays the pie charts 86K of the processing tools 6 on a daily basis on the confirmation screen 72X of the display 70 such that the pie charts 86K are aligned in the lateral direction. Thus, the operator can easily compare the use times of the processing tools 6 on a daily basis in a specific period.

In the cutting system 10 of this preferred embodiment, the display controller 55 causes the confirmation screen 72X of the display 70 to list and display job data that corresponds to a crown prosthesis that has been produced on a daily basis. Thus, the operator can easily confirm which and how many crown prostheses have been produced on a specific day.

In the cutting system 10 of this preferred embodiment, the display controller 55 causes the confirmation screen 72X of the display 70 to list and display the doughnut graph 82, 82A, 82B for each cutting machines 20A to 20D. Thus, the operator can compare the operating times to one another for each of the cutting machines 20A to 20D.

Preferred embodiments of the present invention have been described above. However, the above-described preferred embodiments are merely examples and the present invention may be implemented in various other forms.

In an above-described preferred embodiment, the operating times of the cutting machines 20A to 20D on a daily basis, a weekly basis, or a monthly basis are displayed in donut graphs, but display of the operating time is not limited thereto. The operating time may be displayed in a graph of some other type, such as a pie chart, a bar chart, or the like.

In an above described preferred embodiment, the operating times of the cutting machines 20A to 20D, the processing times of the workpieces 5, and the use times of the processing tools 6 are displayed on a daily basis, a weekly basis, or a monthly basis but may be displayed on a yearly basis. Also, in the cutting system 10, instead of the above described units, the operator can set an arbitrary unit (for example, every five days, every three weeks, every three months, or the like).

In an above described preferred embodiment, the pie chart 86 that indicates the processing ratio and the pie chart 86H that indicates the use ratio are separately displayed, but the pie chart 86 and the pie chart 86H may be displayed on the same confirmation screen 72X.

In an above described preferred embodiment, the operating times of the cutting machines 20A to 20D or the like are calculated in the operation terminals 50A to 50D coupled to the cutting machines 20A to 20D, respectively, but calculation of the operating times is not limited thereto. The operating times of the cutting machines 20A to 20D or the like may be calculated in one of the operation terminals 50A to 50D.

In an above described preferred embodiment, the four operation terminals 50A to 50D are used for the cutting machines 20A to 20D, but the number of operation terminals for the cutting machines 20A to 20D is not limited thereto. For example, a configuration in which the cutting machines 20A to 20D and one operation terminal are coupled may be used.

In an above described preferred embodiment, the workpiece 5 to which the adaptor 8 is attached is automatically attached to and detached from the clamp 36 by the conveyor 44, but the configuration of a cutting machine according to the present invention is not limited thereto. A cutting machine according to a preferred embodiment of the present invention may be a cutting machine that does not include the conveying device 40 and with which an operator manually attaches and detaches the workpiece 5 to which the adaptor 8 is attached to and from the clamp 36.

The above described cutting system 10 includes the server 12 and the router 14, but the cutting system 10 may be a cutting system of a stand-alone type in which the server 12 and the router 14 are omitted.

## Claims

1. A cutting system comprising:
a cutting machine including:
a plurality of processing tools that process a workpiece to produce a crown prosthesis; and
a tool magazine that accommodates the plurality of processing tools;
a display that displays an operation status of the cutting machine; and
a controller that transmits job data of the crown prosthesis to the cutting machine; wherein
the controller includes:
a first counter that counts an operating time of the cutting machine in a predetermined unit; and
a display controller that puts the counted operating time into a first graph and displays the first graph on the display; and
the display controller displays, if the operating time is less than a predetermined time, the first graph in a first color on the display and displays, if the operating time is the predetermined time or more, the first graph in a second color that is different from the first color on the display.

2. The cutting system according to claim 1, wherein the display controller displays a ratio of the operating time that has been counted to the predetermined time on the display such that the ratio is aligned with the first graph.

3. The cutting system according to claim 1 or 2, wherein the display controller displays the first graphs of the cutting machine on a daily basis on the display such that the first graphs are aligned.

4. The cutting system according to any one of claims 1 to 3, wherein the display controller displays, on the display, a line graph that indicates a ratio of the operating time on a daily basis to the predetermined time in the predetermined unit and a reference line that appears in a portion on which the line graph is displayed and corresponds to the predetermined time.

5. The cutting system according to any one of claims 1 to 4, further comprising:
a stocker in which the plurality of workpieces is accommodated; and
a conveying mechanism that provides and removes the plurality of workpieces to and from the stocker and conveys the plurality of workpieces; wherein
the controller includes a second counter that counts each of processing times of the plurality of workpieces in the predetermined unit; and
the display controller puts a ratio of the processing time of each of the workpieces, which has been counted, to a total time of the processing times that have been counted, into a second graph and displays the second graph on the display.

6. The cutting system according to claim 5, wherein the display controller displays the second graphs of the workpieces on a daily basis on the display such that the second graphs are aligned.

7. The cutting system according to any one of claims 1 to 6, wherein
the controller includes a third counter that counts each of use times of the plurality of processing tools in the predetermined unit; and
the display controller puts a ratio of the use time of each of the processing tools, which has been counted, to a total time of the use times that have been counted into a third graph, and displays the third graph on the display.

8. The cutting system according to claim 7, wherein the display controller displays the third graphs of the processing tools on a daily basis on the display such that the third graphs are aligned.

9. The cutting system according to any one of claims 1 to 8, wherein
the cutting machine processes the workpiece, based on the job data, to produce the crown prosthesis; and
the display controller causes the display to list and display the job data that corresponds to the produced crown prosthesis on a daily basis.

10. The cutting system according to any one of claims 1 to 9, wherein
the cutting system includes the at least two cutting machines; and
the display controller causes the display to list and display the first graph for each of the cutting machines.
